# EUROPEAN PATENT APPLICATION

(11) **EP 1 870 697 A2**
(43) Date of publication of application: **26.12.2007**
(21) Application number: 07252491.1
(22) Date of filing: 19.06.2007
(51) Int. Cl.: G01N 21/27

(54) **Solid control and/or calibration element for use in a diagnostic analyzer**

(30) Priority: 20.06.2006 US 471384
(71) Applicant: ORTHO-CLINICAL DIAGNOSTICS, INC., Rochester, New York 14626 (US)
(72) Inventor: LaCourt, Michael W., Spencerport NY 14559 (US); Mehalek, Glen M., Pittsford NY 14534 (US)
(74) Representative: Mercer, Christopher Paul

(57) **Abstract**

A solid element for use as a control or calibration element which can be used in a diagnostic analyzer. The element includes a translucent or transparent solid material which when illuminated by a light source emits light corresponding to a specified concentration of a specific analyte as an analyte being measured. The solid element (10) may be insertable into a vessel, e.g., a metering tip (20), or may itself be in the shape of a vessel.

## Description

### BACKGROUND OF THE INVENTION

The present invention relates to calibration and/or quality control of an instrument, such as a diagnostic analyzer. In particular, the present invention relates to calibration and/or control of a spectrophotometric instrument on a diagnostic analyzer.

Known diagnostic analyzers include clinical chemistry analyzers such as the Vitros® 5,1 FS, sold by Ortho-Clinical Diagnostics, Inc. All such analyzers are collectively called diagnostic analyzers. Diagnostic analyzers are used to determine the presence or concentrations of analytes in biological samples. Briefly, an analyzer may include a spectrophotometer which includes a light source and a sensor. A beam of light at one or more wavelengths is transmitted through the biological sample. Depending on the type of analysis employed, the amount of light transmitted through the sample and vessel used to contain the sample, such as a cuvette, is measured. Depending on the amount of light measured, the presence or concentration of the analyte being measured can be calculated.

Some analyzers can also include a sample integrity or sample quality determination to determine if the sample has characteristics which may interfere with the analysis for analytes of interest. For example, it is known that components of blood such as free hemoglobin, bilirubin and lipids (expressed as turbidity) can interfere with the analysis of plasma or serum for other analytes. By assessing the sample for these interferents before further analysis, errors in the prediction of analyte concentration can be reduced or avoided altogether. Systems for assessing sample integrity are described, for example, in U.S. Patent Nos. 6,013,528 and 6,353,471, which are incorporated by reference in their entireties. As described in the '528 patent, a sample integrity system includes fiber optics 98, 98'. The fiber optics are connected to a spectrophotometer that includes a light source and detector in a single unit 110. The fiber optics directs a beam of near infrared and visible radiation through tip 48. A plasma or serum sample is within the tip. In some systems, the tip is sealed to provide a source of sample to be used in subsequent analysis. See, e.g., U.S. Patent No. 6,797,518.

Spectrophotometers, used in both sample integrity and in the analysis of samples for analytes, typically employ means for periodic calibration and control. Calibration and control of spectrophotometers are per se well known as described in Tietz, Fundamentals of Clinical Chemistry, W.B Saunders, 1987. pp 58-61.

Generally, calibrators and controls are liquids containing specified concentrations of the analyte or interferent of interest. In some cases, fluids containing dyes are employed to obtain an instrument response similar to that caused by a biological sample. See, for example, U.S. Patent No. 6,828,152. Biological materials for calibration and control are often identified as biohazards. They usually are assigned an expiration date due to stability concerns. Opened liquid materials (including reconstituted materials) typically have short stability claims. Evaporation may cause changes in analyte concentration. Calibration and control techniques using liquids described above involve the use of consumable products that are often costly, require transportation and storage within specified environmental limits (e.g., temperature), and need to be characterized for analyte concentration on a lot-by-lot basis.

Solid elements such as opaque white or black slides are used in dry chemistry systems, such as the Vitros® 950 sold by Ortho-Clinical Diagnostics, to confirm that the hardware is functioning properly. These opaque elements are not used for control and/or calibration.

For the foregoing reasons, there is a need for a means of calibration and/or control that does not suffer from the disadvantages of liquids currently used in diagnostic analyzers.

### SUMMARY OF THE INVENTION

The present invention is directed to a method that solves the foregoing problems of using liquid calibrators and/or controls.

One aspect of the invention is directed to a solid element for use as a control or calibration element for use in a diagnostic analyzer. The element includes a translucent or transparent solid material which when illuminated by a light source emits light corresponding to a specified concentration of a specific analyte as an analyte being measured. In a preferred embodiment, the analyte is used to assess the quality of a sample being analyzed.

In another preferred embodiment, the element is insertable into a vessel used to contain a sample having the analyte being spectrophotometrically measured. In still another preferred embodiment, the control or calibration element includes a top end, a bottom end and a side portion between the top and bottom end, wherein the side portion is positioned to be in the path of the light source and at least one of the top or bottom end is rendered opaque by an opaque coating, covering or insert.

Another aspect of the invention provides method for determining at least the presence of hemolysis or turbidity in a sample. The method includes: providing a transparent or translucent metering tip having plasma or serum therein, said metering tip having a region in the sidewalls to allow for a spectrophotometric measurement; sealing the bottom of the tip and inserting the metering tip into a sample integrity apparatus which can determine the presence of hemolysis or turbidity; lifting the metering tip to a position which aligns the window in the tip with a spectrophotometric beam of the sample integrity apparatus; transmitting the beam of light through the windows to a detector to determine the absorbance of light by the sample; correlating the absorbance of light to the presence of hemolysis or turbidity in the sample, the process further comprising, inserting a control element having the shape of a the metering tip and further having the top of the tip rendered opaque into the sample integrity apparatus at fixed intervals as a control element to confirm the proper operation of the sample integrity apparatus, and further wherein if the lifting of the metering tip is malfunctioning the beam of light will be absorbed by the opaque region, resulting in a warning indication.

Another aspect of the invention provides a combination solid calibration or control element and vessel for use in a diagnostic analyzer. The combination includes a translucent or transparent solid material, and a vessel used to contain a sample being spectrophotometrically measured. The calibration or control element is contained within the vessel.

Yet another aspect of the invention is directed to a method of taking a control measurement in a spectrophotometric process of a spectrophotometric system. The method includes: providing a solid control element comprising a translucent or transparent material which emits light corresponding to a specified concentration of one or more analytes to be measured; providing a light source and a detector for detecting emitted light; taking at least one measurement at one or more wavelengths that includes: (i) directing a beam of light from the light source to the control element; (ii) transmitting the beam through the control element to be measured; and (iii) measuring the emitted light beam with the detector; and comparing the expected concentration to the concentration predicted by the spectrophotometric process to confirm the proper operation of the system.

Yet another aspect of the invention provides a method of calibrating a spectrophotometric process. The method includes: providing at least two solid calibration elements comprising translucent or transparent materials which emit light corresponding to specified concentrations of one or more analytes to be measured; providing a light source and a detector for detecting emitted light; taking at least one measurement at one or more wavelengths that includes: (i) directing a beam of light from the light source to the calibration elements; (ii) transmitting the beam through the solid calibration elements to be measured; and (iii) measuring the emitted light beam with the detector; and correlating the detector output with the known two or more analyte concentrations of the solid calibration element to calibrate the spectrophotometric process.

Further objects, features and advantages of the present invention will be apparent to those skilled in the art from detailed consideration of the preferred embodiments that follow.

### BRIEF DESCRIPTION OF THE DRAWINGS

Figure 1 is a known sample integrity spectrophotometer and a sealed metering tip containing a conventional sample integrity calibration or control fluid.
Figure 2 depicts a solid control element inserted into a metering tip according to one embodiment of the present invention.
Figure 3 depicts a solid control element in the shape of a metering tip according to one embodiment of the present invention.
Figure 4 is a known sample integrity spectrophotometer and a sealed metering tip according to one embodiment of the present invention.
Figure 5 is a plot of absorbance vs. wavelength for both a sample integrity control fluid and a solid control element.

### DETAILED DESCRIPTION OF PREFERRED EMBODIMENTS

The present invention solves the problem of liquid calibrators and controls by providing a stable, inexpensive, non-hazardous solid substance(s) to provide a spectral reference used for the control and/or calibration of diagnostic analyzers. This solid substance is generally hereinafter generically referred to as a "solid control element." It will be understood that even though "control" is used in describing the element in the description of preferred embodiments, the solid control element could be equally well used as a calibration element for a spectrophotometer. In those embodiments specifically describing calibration, the solid substance will be referred to as a "solid calibration element".

The method of the present invention can be used in any analysis methodology and analyzer that includes detecting light from a sample to be assessed and is broadly referred to herein as spectrophotometry. This includes photometry which is sometimes defined as analysis of light radiation to correlate a response to only a particular wavelength.

Some examples include absorption photometry assays such as end-point reaction analysis and rate of reaction analysis, turbidimetric assays, nephelometric assays, radiative energy attenuation assays (such as those described in U.S. Pat. No. 4,743,561 and incorporated herein by reference), colorimetric assays, and fluorometry spectrophotometry assays, and immunoassays, all of which are well known in the art. A preferred analysis technique is absorption spectrophotometry, such as end-point reaction analysis, rate of reaction analysis and reagentless sample integrity assessments. Some or all of these techniques can be done with classic wet chemistries; thin film formatted "dry" chemistries such as Vitros® brand dry slides; bead and tube formats or microtiter plates; and the use of magnetic particles.

The preferred embodiments of the present invention are described with reference to absorption spectrophotometry although the broad aspect of the present invention is not so limited. Spectrophotometric techniques are described in, e.g., Modern Optical Methods of Analysis by Eugene D. Elson 1975, which is incorporated by reference in its entirety.

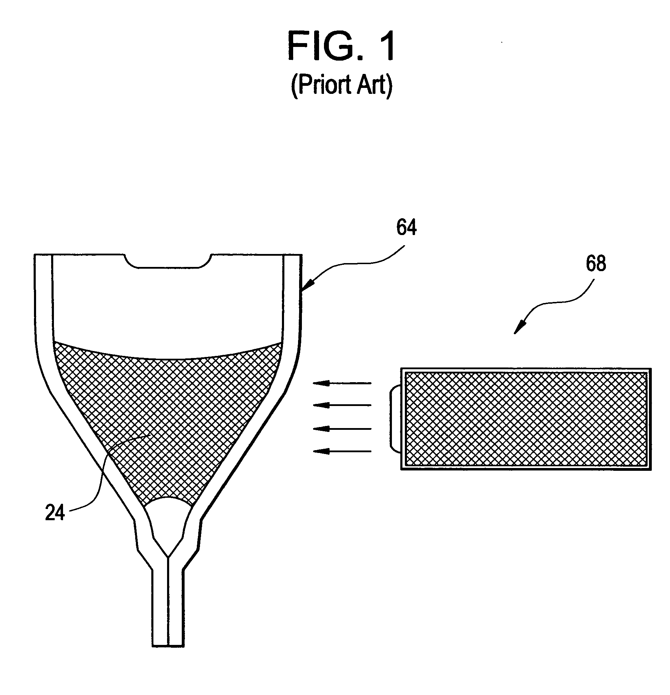

The solid control elements can be used in spectrophotometers on diagnostic analyzers, such as those described above. Spectrophotometers are known per se. Figure 1 is a diagrammatic illustration of a spectrophotometer used in connection with sample quality assessment. The sample quality assessment of the present invention is performed by a spectrophotometer 68. The spectrophotometer 68 is not described in any detail, because any suitable spectrophotometer may be used, provided it operates acceptably. For sample quality assessment, the spectrophotometer is preferably responsive to radiation in the near-infrared and adjacent visible light regions with sufficient precision. The term "near-infrared and adjacent visible radiation" or light means radiation between about 400 and 2500 nm, and preferably between about 475 and 1075 nm. In operation, the cuvette 64 is positioned at the sample quality station, and a beam of preferably near-infrared and adjacent visible wavelengths is passed through the cuvette 64 and any liquid sample 24 inside. The radiation transmitted is spectrophotometrically characterized by the spectrophotometer 68. The signal produced by the detector is then correlated with the concentration of target analytes.

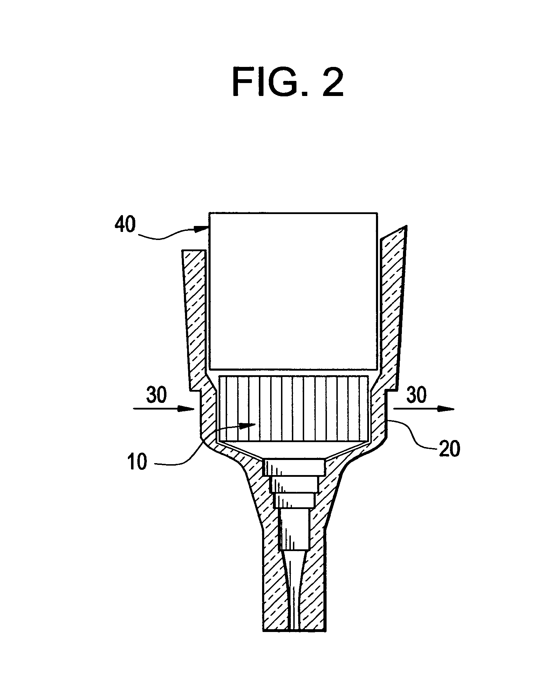

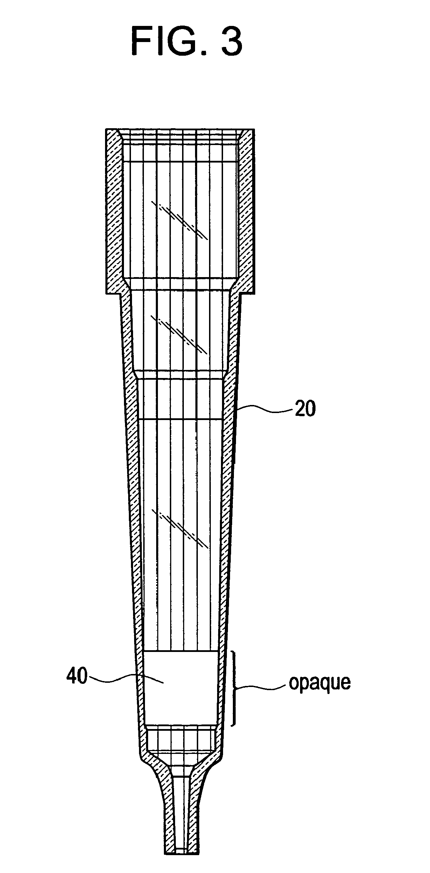

The solid control element is a colored solid, which provides reflection, transmission or scattering in a spectrum relevant to the method used to determine the presence or concentration of an analyte. In one embodiment, the solid control element will preferably be formed to be insertable into the vessel in which the measurement takes place. For example, in a cylindrical cuvette, the control element would take the shape of a cylindrical rod. In those instances where the vessel is a dry slide, such as those in Vitros® diagnostic analyzers, the control element would be a flat reflective surface. It is not necessary that the element occupy the entire volume of the vessel, only that part which is in the path of a beam of light incident on the spectrophotometer detector. Figure 2 depicts a solid control element 10 in a metering tip 20, which performs as a vessel for metered sample, such as serum or plasma in a sample quality assessment. As Figure 2 indicates, the solid element only occupies that portion of the tip 20 that is in the path of the optical beam 30. In another preferred embodiment, the solid control element takes the shape of the vessel that will be used to contain the sample. Thus, the vessel itself, as opposed to an insert, will have a color having the desired absorbance characteristics. As shown in the embodiment of Figure 3, the vessel is in the shape of a metering tip 20 that is colored red for sample integrity analysis. In yet another embodiment, the solid control element is neither in the vessel nor has the shape of the vessel. Instead, the control element is configured such that it can be inserted into an optical beam by itself.

Figures 2 and 3 show an opaque insert, covering or coating (collectively called "region") over the solid control element or the solid vessel shaped control element. In the embodiment of Figure 2, the opaque region 40 is a solid plastic that is insertable into metering tip 20. The opaque region is useful for preventing stray light from interfering with the spectrophotometric measurement.

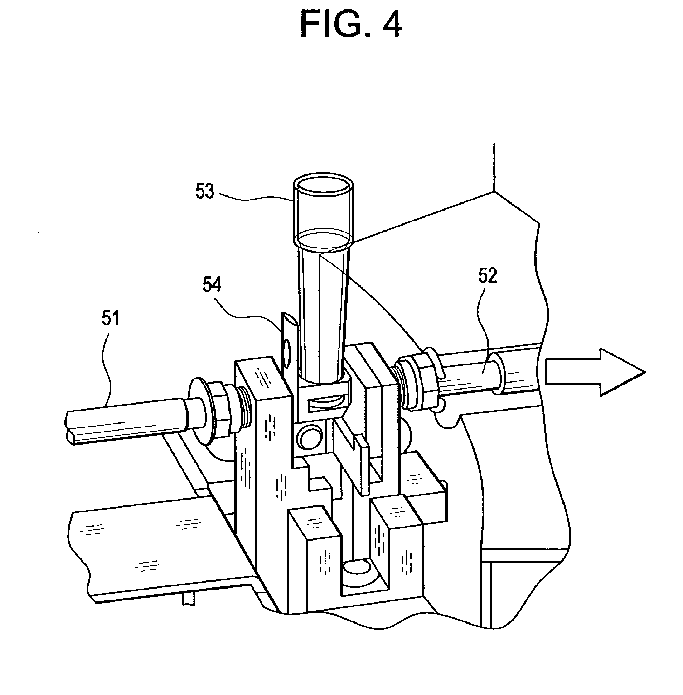

Another feature of the opaque region is described in connection with Figure 4. The sample quality spectrophotometer is similar to that shown in connection with Figure 1. The Figure 4 embodiment includes a light source (illumination fiber bundle) 51, a detector (pick up fiber) 52 and metering tip containing sample or a control element 53 and a tip lifter 54. The tip lifter 54 raises the tip to align a window portion of the tip with the light source and detector. In the present invention, in the event the tip lifter is malfunctioning, the opaque portion of the control element will remain in the path the light source 51 and detector 52. Since there will be no light incident on detector 52, the operator will know that the tip lifter is malfunctioning and be able to take steps to rectify the malfunction.

The solid control element is made of any suitable material, such as an acrylic polymer or a polypropylene polymer, having an optical absorbance spectrum similar to the analyte to be controlled over wavelength ranges of interest. Dyes or texturing will be added to the material to give it similar spectral characteristics to the analyte of interest. The color provides spectral information that yields a specified analyte concentration via the instrument's method. The color and density of the element are chosen to provide an instrument prediction within the instrument operating range.

The skilled artisan would be capable of selecting the appropriate material for the analyte being calibrated or controlled. For example, in the case of sample quality assessment, a red transparent or translucent acrylic rod can be used which will give spectral characteristics similar to hemolysis, bilirubin (icterus) and turbidity (lipids). In another embodiment, a metering tip is formed from PD702 polypropylene with transparent red dye added and additional texture added to the molding tool. The texture scatters the light and simulates a turbid sample. Although red is referred to for sample quality, other colors may also be used depending on the analyte of interest.

In one embodiment, the solid control element may be inserted into a sample vessel or reaction vessel, providing a means to verify the overall process of transporting, positioning and reading the contents of the vessel. As described above, in another embodiment, the vessel itself will have the desired spectral characteristics to act as the control element. The vessel can be any suitable for spectrophotometric analysis. For example, a cuvette may be used, such as those described in U.S. Patent Application No. 2003/0003591, Des. 290,170 and U.S. Patent No. 4,639,135 all of which are incorporated in their entireties. Other suitable vessels can include dry slides, such as Vitros® brand dry slides. For sample quality assessments a sealed metering tip, such as a Vitros® Versatip, sold by Ortho-Clinical Diagnostics can be used. Such tips are described in U.S. Patent No. 6,797,518, incorporated herein by reference in its entirety. Useful translucent or transparent materials for the metering tips that allow desired spectral penetration are those commonly used to manufacture clinical analyzer disposable tips, including polypropylene and polyethylene. Since the solid control element does not deteriorate appreciably with time, the control element may be reused. Also in view of its stability, the solid control element could also be hard mounted on the diagnostic analyzer and be positioned as needed at the detector.

Advantages of the solid control element over liquid controls include:
1. Low cost.
2. No recurring costs for consumables (liquids, sample vessels, reaction vessels).
3. No ordering, storage or handling of consumables.
4. No stability or expiration concerns.
5. No evaporation concerns.
6. Little or no operator interaction required to perform measurements.
7. No handling of toxic materials.
8. No handling of biohazard materials.
9. Measurements can be programmed to automatically take place at a specific frequency (e.g. every 100 samples or every 2 hours)

The present invention also provides a method of calibrating a spectrophotometric process using the solid control element described above as a solid control element. The solid calibration element is inserted into the optical path of a spectrophotometer that includes a light source and a detector. The solid calibration element emits light corresponding to a specified concentration of one or more analytes to be measured when illuminated by the light source. At least one measurement is taken at one or more wavelengths by: directing a beam of light from the light source to the solid calibration element; transmitting the beam through the solid calibration element and optionally the vessel to be measured; and measuring the emitted light beam with the detector.

The detector output is correlated with the specified one or more analytes equivalent concentration of the solid calibration element to calibrate the spectrophotometric process using methods well known in the art. For example, determining the calibration can either be carried out by hand using a graph of absorbance versus concentration of analyte. More preferably, the correlation data can be loaded onto a computer and the computer determines the concentration of analyte based on input of absorbance. The calibration can also be carried out at different analyte concentrations by using additional calibration elements having transmittances corresponding to the different analyte concentrations. The present invention also provides a method for taking a control measurement in a spectrophotometric process. The process includes: providing a solid control element described above. The element is a translucent or transparent material which emits light corresponding to a specified concentration of one or more analytes to be measured. A light source, such as shown in Figure 4 and a detector for detecting emitted light is provided. One or more measurements are taken at one or more wavelengths. The measurements include: (i) directing a beam of light from the light source to the control element; (ii) transmitting the beam through the control element to be measured; and (iii) measuring the emitted light beam with the detector. The specified concentration of the control element is compared to the concentration predicted by the calibration of the spectrophotometric process to confirm the calibration is correct or the system is operating within specified control limits.

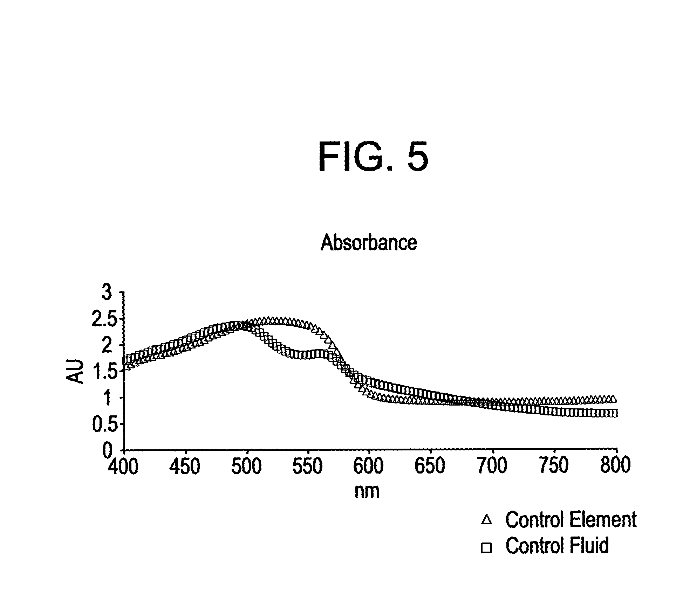

The present invention has been found to be particularly useful for sample quality assessments as described in U.S. Patent No. 6,353,471, incorporated herein by reference. Figure 5 is a graph of absorbance (AU) versus wavelength for both a red acrylic control element, and a control fluid that mimics hemoglobin, bilirubin (icterus) and lipids (turbidity) in serum or plasma. As Figure 5 demonstrates, the absorbance of the control element over the range of wavelengths is very similar to the absorbance of the control fluid.

Table 1 below compares the measured concentration (mg/dL) of hemoglobin, bilirubin (icterus) and lipids (turbidity) for both a red acrylic control element and a standard control fluid. As Table 1 indicates, the measured values for the solid control element were all within the operating range of the spectrophotometer.

**Table 1**

| **Sample** | **Hemolysis** | **Icterus** | **Turbidity** |
|---|---|---|---|
| Solid Control Element | 452.1 | 7.44 | 216.8 |
| Control Fluid | 296.0 | 11.56 | 201.9 |

lt will be apparent to those skilled in the art that various modifications and variations can be made to the compounds, compositions and processes of this invention. Thus, it is intended that the present invention cover such modifications and variations, provided they come within the scope of the appended claims and their equivalents.

The disclosure of all publications cited above are expressly incorporated herein by reference in their entireties to the same extent as if each were incorporated by reference individually.

## Claims

1. A solid element for use as a control or calibration element for use in a diagnostic analyzer comprising a translucent or transparent solid material which when illuminated by a light source emits light corresponding to a specified concentration of a specific analyte as an analyte being measured.

2. A solid element for use as a control or calibration element as claimed in claim 1, wherein the analyte is used to assess the quality of a sample being analyzed.

3. A solid element for use as a control or calibration element as claimed in claim 1, wherein the element is insertable into a vessel used to contain a sample having the analyte being spectrophotometrically measured.

4. A solid element for use as a control or calibration element as claimed in claim 1, wherein the element is in the shape of a vessel used to contain a sample having an analyte being spectrophotometrically measured.

5. A solid element for use as a control or calibration element as claimed in claim 1, wherein the element is not located in a vessel or in the shape of the vessel but is configured to be inserted into the path of the light source.

6. A solid element for use as a control or calibration element as claimed in claim 3, wherein the control or calibration element includes a top end, a bottom end and a side portion between the top and bottom end, wherein the side portion is positioned to be in the path of the light source.

7. A solid element for use as a control or calibration element as claimed in claim 6, wherein at least one of the top or bottom end is rendered opaque by an opaque coating, covering or insert.

8. A solid element for use as a control or calibration element as claimed in claim 7, wherein the opaque covering is an opaque solid covering.

9. A solid element for use as a control or calibration element as claimed in claim 4, wherein the vessel includes a top portion having an open end.

10. A solid element for use as a control or calibration element as claimed in claim 9, wherein the top portion is rendered opaque by an insert or a coating.

11. A solid element for use as a control or calibration element as claimed in claim 4, wherein the vessel is in the shape of a metering tip, a cuvette, or a slide.

12. A solid element for use as a control or calibration element as claimed in claim 11, wherein the vessel is a metering tip and the top portion of the metering tip is rendered opaque by an insert or a coating.

13. A method for determining at least the presence of hemolysis or turbidity in a sample comprising:
providing a transparent or translucent metering tip having plasma or serum therein, said metering tip having a region in the sidewalls to allow for a spectrophotometric measurement;
sealing the bottom of the tip and inserting the metering tip into a sample integrity apparatus which can determine the presence of hemolysis or turbidity;
lifting the metering tip to a position which aligns the window in the tip with a spectrophotometric beam of the sample integrity apparatus;
transmitting the beam of light through the windows to a detector to determine the absorbance of light by the sample;
correlating the absorbance of light to the presence of hemolysis or turbidity in the sample, the process further comprising, inserting a control element having the shape of a the metering tip and further having the top of the tip rendered opaque into the sample integrity apparatus at fixed intervals as a control element to confirm the proper operation of the sample integrity apparatus, and further wherein if the lifting of the metering tip is malfunctioning the beam of light will be absorbed by the opaque region, resulting in a warning indication.

14. A combination solid calibration or control element and vessel for use in a diagnostic analyzer comprising a translucent or transparent solid material, and a vessel used to contain a sample being spectrophotometrically measured, wherein the calibration or control element is contained within the vessel.

15. A combination as claimed in claim 14, wherein the vessel is selected from the group consisting of a sealed metering tip, a cuvette, or a slide.

16. A combination as claimed in claim 14, wherein the calibration or control element includes a top end, a bottom end and a side portion between the top and bottom end, wherein the side portion is positioned to be in the path of a spectrophotometric beam.

17. A combination as claimed in claim 16, wherein at least one of the top or bottom end is rendered opaque by a covering or insert.

18. A combination as claimed in claim 17, wherein the opaque region is an opaque solid plastic covering, or paint, or metal sleeve.

19. A method of taking a control measurement in a spectrophotometric process of a spectrophotometric system comprising:
providing a solid control element comprising a translucent or transparent material which emits light corresponding to a specified concentration of one or more analytes to be measured;
providing a light source and a detector for detecting emitted light;
taking at least one measurement at one or more wavelengths that includes:
(i) directing a beam of light from the light source to the control element;
(ii) transmitting the beam through the control element to be measured; and
(iii) measuring the emitted light beam with the detector; and
comparing the specified concentration to the concentration predicted by the spectrophotometric process to confirm the proper operation of the system.

20. A method as claimed in claim 19, wherein the spectrophotometric process is a sample integrity process in a diagnostic analyzer and the analytes to be determined are interferents which comprise hemoglobin and turbidity.

21. A method as claimed in claim 20, wherein the element is a colored vessel having the same shape as a vessel used to contain a sample having an analyte being spectrophotometrically measured.

22. A method of calibrating a spectrophotometric process comprising:
providing at least two solid calibration elements comprising translucent or transparent materials which emit light corresponding to specified concentrations of one or more analytes to be measured;
providing a light source and a detector for detecting emitted light;
taking at least one measurement at one or more wavelengths that includes:
(i) directing a beam of light from the light source to the calibration elements;
(ii) transmitting the beam through the solid calibration elements to be measured; and
(iii) measuring the emitted light beam with the detector; and
correlating the detector output with the known two or more analyte concentrations of the solid calibration element to calibrate the spectrophotometric process.

23. A method as claimed in claim 22, further comprising:
providing additional solid calibration elements corresponding to different concentrations of the one or more analytes to be measured;
taking at least one measurement for each additional calibration element; and
correlating the detector output with the specified analyte concentration of each additional solid calibration element to calibrate the spectrophotometric process.

24. A method as claimed in claim 19, wherein the spectrophotometric process is a sample integrity process in a diagnostic analyzer and the analytes to be determined are interferents which comprise hemoglobin and turbidity.

25. A method as claimed in claim 24, wherein the interferents further comprise icterus.

26. A method as claimed in claim 24, wherein the solid control element comprises a red acrylic plastic rod located within a vessel used to hold sample.

27. A method as claimed in claim 24, wherein the solid control element comprises a colored vessel having the same shape as a vessel used to hold sample.
